# EUROPÄISCHE PATENTSCHRIFT

(11) **EP 3 700 769 B1**
(45) Veröffentlichungstag und Bekanntmachung des Hinweises auf die Patenterteilung: **25.08.2021**
(21) Anmeldenummer: 18800047.5
(22) Anmeldetag: 22.10.2018
(51) Int. Cl.: B60K 15/03

(54) **FLÜSSIGKEITSBEHÄLTER FÜR EIN KRAFTFAHRZEUG UND VERFAHREN ZUM HERSTELLEN EINES FLÜSSIGKEITSBEHÄLTERS**
LIQUID CONTAINER FOR A MOTOR VEHICLE AND METHOD FOR PRODUCING A LIQUID CONTAINER
RÉSERVOIR DE LIQUIDE POUR UN VÉHICULE AUTOMOBILE ET PROCÉDÉ DE FABRICATION D'UN RÉSERVOIR DE LIQUIDE

(30) Priorität: 27.10.2017 DE 102017125264
(43) Veröffentlichungstag der Anmeldung: 02.09.2020
(73) Patentinhaber: Kautex Textron GmbH & Co. KG, 53229 Bonn (DE)
(72) Erfinder: BOUFFIER, Roman, 53639 Königswinter (DE)
(74) Vertreter: Richly & Ritschel Patentanwälte PartG mbB
(86) Internationale Anmeldenummer: PCT/EP2018/078852
(87) Internationale Veröffentlichungsnummer: WO 2019/081410

(56) Entgegenhaltungen:
- DE-A1-102009 059 100
- DE-A1-102013 004 931
- US-A1- 2015 102 026

## Beschreibung

Die vorliegende Erfindung betrifft einen Flüssigkeitsbehälter für ein Kraftfahrzeug sowie ein Verfahren zum Herstellen eines Flüssigkeitsbehälters.

Flüssigkeitsbehälter dienen in Kraftfahrzeugen dazu, Betriebsflüssigkeiten wie Kraftstoff, wässrige Harnstofflösung zur Abgasnachbehandlung oder Wasser zur Kühlung des Motors oder zur Wasserinjektion zu bevorraten.

Insbesondere Kunststoffkraftstoffbehälter müssen eine Vielzahl gesetzlicher Vorgaben hinsichtlich der Crashsicherheit, der maximal zulässigen Kraftstoffverdunstungsemission und der Vermeidung von Kraftstoffleckagen unter allen Betriebsbedingungen erfüllen. Dies wird üblicherweise durch einen mehrschichtigen, im Coextrusions-Blasformen hergestellten Wandungsaufbau erreicht. Hierbei wird beispielsweise eine Permeationsbarriere aus EVOH (Ethylen-Vinylalkohol-Copolymer) zweiseitig nach Art einer Sandwichstruktur von HDPE (High Density Polyethylene) Schichten eingefasst, wobei gegebenenfalls Haftvermittlerschichten aus LDPE (Low Density Polyethylen) zur Verbindung der zentralen EVOH-Barriereschicht mit den außenliegenden HDPE-Deckschichten verwendet werden.

Gleichzeitig besteht die Forderung, dass ein solcher Kunststoffkraftstoffbehälter ein möglichst geringes Gewicht aufweisen soll, um den Kraftstoffverbrauch und damit auch die Kohlendioxidemission eines Kraftfahrzeugs weiter zu reduzieren.

Das Gewichtseinsparungspotential für im Extrusionsblasformen hergestellte Kunststoffkraftstoffbehälter ist prozessbedingt aufgrund der Reckvorgänge zum Erreichen der benötigten Mindestwanddicken jedoch stark limitiert, wobei sich die benötigten Mindestwanddicken z.B. aus Formbeständigkeits- und Brandanforderungen des herzustellenden Behälters ergeben.

Mithilfe des Spritzgussverfahrens lassen sich gleichmäßigere Wanddicken erreichen, so dass sich die erforderlichen Mindestwanddicken unter geringerem Materialeinsatz erreichen lassen, so dass das Gewicht eines im Spritzgussverfahren hergestellten Kunststoffkraftstoffbehälters gegenüber einem im Coextrusions-Blasformen hergestellten Kunststoffkraftstoffbehälter insgesamt reduziert werden kann. So kann eine Wanddicke eines im Spritzgussverfahren hergestellten Kunststoffkraftstoffbehälters z.B. 3 mm betragen, während ein vergleichbarer, im Coextrusions-Blasformen hergestellter Kunststoffkraftstoffbehälter eine Wandstärke von 5 mm aufweist. Weiter können Funktionskomponenten eines Kunststoffkraftstoffbehälters im Spritzgussverfahren kostengünstig integriert werden.

Eine Herausforderung bei der Herstellung eines Flüssigkeitsbehälters, insbesondere eines Kunststoffkraftstoffbehälters, im Spritzgussverfahren besteht darin, eine Wandung herzustellen, die einerseits die Barrierefunktion zur Minimierung der Kohlenwasserstoffemission erfüllt und gleichzeitig den mechanischen Bauteilanforderungen an die Formbeständigkeit im Betrieb und an die Crashsicherheit gerecht wird.

Hierbei ergeben sich bezüglich der mechanischen Eigenschaften konträre Zielsetzungen. Einerseits soll sich der Kunststoffkraftstoffbehälter unter der statischen Last seines Eigengewichts und der aufgenommenen Flüssigkeit nicht wesentlich verformen, wobei ein Durchhängen der Wandung, auch "Sagging" genannt, bis hin zu Temperaturen von 80°C vermieden werden soll. Es wird demnach eine hohe Steifigkeit des Kunststoffkraftstoffbehälters gefordert. Andererseits soll eine hohe Verformbarkeit bei Aufprallbeanspruchungen gegeben sein, so dass, auch bei niedrigen Temperaturen bis zu -40°C, die strukturelle Integrität der Tankblase gewährleistet wird, um ein Austreten von Kraftstoff im Crashfall zu verhindern. DE 10 2013 004931 A1 beschreibt einen gattungsgemäßen Flüssigkeitsbehälter.

Hinsichtlich der Barrierefunktion zur Minimierung der Kohlenwasserstoffemission ist der aus dem Coextrusions-Blasformen bekannte fünf- oder sechsschichtige Wandungsaufbau, mit einem Grundmaterial aus HDPE und einer Barriereschicht aus EVOH, nicht ohne Weiteres im Spritzgussverfahren realisierbar. Ein Grundmaterial, das als Monolayer sowohl der geforderten Barrierefunktion als auch den oben beschriebenen mechanischen Anforderungen gerecht wird, ist nicht bekannt.

Vor diesem Hintergrund liegt der Erfindung die technische Problemstellung zugrunde, einen Flüssigkeitsbehälter für ein Kraftfahrzeug sowie ein Verfahren zum Herstellen eines Flüssigkeitsbehälters für ein Kraftfahrzeug anzugeben, die die voranstehend beschriebenen Anforderungen zumindest teilweise erfüllen, und insbesondere einen leicht bauenden, formbeständigen, crashsicheren sowie emissionsminimierten Flüssigkeitsbehälter ermöglichen.

Die voranstehend beschriebene, technische Problemstellung wird jeweils gelöst durch einen Flüssigkeitsbehälter nach Anspruch 1 und ein Verfahren nach Anspruch 7. Weitere Ausgestaltungen der Erfindung ergeben sich aus den abhängigen Ansprüchen und der nachstehenden Beschreibung.

Gemäß einem ersten Aspekt betrifft die Erfindung einen Flüssigkeitsbehälter für ein Kraftfahrzeug, mit einem Vorratsvolumen zur Bevorratung einer Flüssigkeit, mit wenigstens einer das Vorratsvolumen zumindest abschnittsweise begrenzenden Schale, wobei die Schale zumindest teilweise im Spritzgussverfahren hergestellt worden ist, wobei die Schale eine Barrierefolie aufweist, wobei die Schale ein Verstärkungselement aufweist, das zumindest teilweise oder vollständig aus einem thermoplastischen Faserverbundwerkstoff gebildet ist, wobei die Schale eine einteilige oder mehrteilige Tragstruktur aufweist, die zumindest teilweise oder vollständig aus einem Spritzgusswerkstoff gebildet ist, wobei die Barrierefolie stoffschlüssig mit dem Verstärkungselement verbunden ist und wobei die Barrierefolie und das Verstärkungselement jeweils stoffschlüssig mit der Tragstruktur verbunden sind.

Dadurch, dass der Spritzgusswerkstoff gezielt mit funktionsoptimierten Elementen kombiniert wird, kann ein leicht bauender Flüssigkeitsbehälter angegeben werden, der formbeständig, crashsicher sowie emissionsminimiert ist. Die Barrierefunktion kommt hierbei der Barrierefolie zu. Das Verstärkungselement und die Tragstruktur sorgen für die Formbeständigkeit und Crashsicherheit des Flüssigkeitsbehälters.

Bei dem Flüssigkeitsbehälter kann es sich um einen Kunststoffkraftstoffbehälter für ein verbrennungsmotorisch angetriebenes Kraftfahrzeug handeln.

Die Barrierefolie kann als Permeationsbarriere zur Minimierung einer Kohlenwasserstoffpermeation durch die Schale eingerichtet sein. Die Barrierefolie kann einlagig oder mehrlagig aufgebaut sein.

Der Flüssigkeitsbehälter, insbesondere Kunststoffkraftstoffbehälter, kann eine Wanddicke von ca. 4 mm oder weniger aufweisen. Es versteht sich, dass der Flüssigkeitsbehälter Verstärkungsrippen oder integrierte Anschlussgeometrien aufweisen kann, wie Schlauchanschlüsse oder dergleichen, im Bereich derer die Wanddicke lokal größer als 4 mm ist.

Die Tragstruktur des Flüssigkeitsbehälters kann einen Spritzgusswerkstoff aufweisen oder aus einem Spritzgusswerkstoff bestehen, wobei die Tragstruktur zumindest teilweise oder vollständig durch Hinterspritzen oder Anspritzen der Barrierefolie und des Verstärkungselements mit dem Spritzgusswerkstoff hergestellt worden sein kann.

Die Tragstruktur kann zusammenhängend und einteilig an der Barrierefolie und der Tragstruktur anliegend gebildet sein. Alternativ kann die Tragstruktur mehrere separate, zueinander beabstandete Segmente, also lokale Materialanspritzungen oder Hinterspritzungen, aufweisen, die stoffschlüssig mit der Barrierefolie und/oder der Verstärkungsstruktur verbunden sind. So kann der Materialeinsatz auf die strukturell wesentlichen Bereiche konzentriert werden.

Es kann vorgesehen sein, dass die Schale ein einzelnes Verstärkungselement aufweist. Es kann vorgesehen sein, dass die Schale zwei oder mehr Verstärkungselemente aufweist. So kann die Schale lokal gezielt verstärkt werden, um die Crashsicherheit und Formbeständigkeit des Flüssigkeitsbehälters zu gewährleisten.

Es kann vorgesehen sein, dass das Verstärkungselement oder wenigstens ein Verstärkungselement in einem Bereich der Schale angeordnet ist, der im fertig montierten Zustand des Flüssigkeitsbehälters im Kraftfahrzeug den Behälterboden bildet. So kann ein Durchhängen des Behälterbodens unter der Last der bevorrateten Flüssigkeit vermieden werden.

Nach einer weiteren Ausgestaltung des Flüssigkeitsbehälters ist vorgesehen, dass das Verstärkungselement zumindest abschnittsweise oder vollständig zwischen der Barrierefolie und der Tragstruktur angeordnet ist. So kann das Verstärkungselement neben der stoffschlüssigen Verbindung ergänzend zumindest abschnittsweise formschlüssig zwischen der Barrierefolie und der Tragstruktur aufgenommen sein oder zumindest abschnittsweise zweiseitig nach Art einer Sandwichstruktur zwischen der Barrierefolie und der Tragstruktur eingefasst bzw. eingebettet sein. Damit kann ein zuverlässiger Zusammenhalt zwischen der Barrierefolie, der Tragstruktur und dem Verstärkungselement gewährleistet werden.

Alternativ oder ergänzend kann vorgesehen sein, dass die Barrierefolie eine Seite des Verstärkungselements teilweise oder vollständig bedeckt. Demnach kann z.B. vorgesehen sein, dass eine der Barrierefolie zugewandte Seite des Verstärkungselements vollflächig von der Barrierefolie bedeckt ist, wobei die Barrierefolie insbesondere bündig bzw. spaltfrei an dem Verstärkungselement anliegt. Damit kann ein zuverlässiger Zusammenhalt zwischen der Barrierefolie und der Tragstruktur gewährleistet werden.

Alternativ oder ergänzend kann vorgesehen sein, dass die Tragstruktur eine Seite des Verstärkungselements zumindest abschnittsweise oder vollständig bedeckt. Demnach kann z.B. vorgesehen sein, dass eine der Barrierefolie abgewandte Seite des Verstärkungselements vollflächig von der Tragstruktur bedeckt ist, wobei die Tragstruktur insbesondere bündig bzw. spaltfrei an dem Verstärkungselement anliegt. Damit kann ein zuverlässiger Zusammenhalt zwischen dem Verstärkungselement und der Tragstruktur gewährleistet werden.

Alternativ kann vorgesehen sein, dass die Tragstruktur eine der Barrierefolie abgewandte Seite des Verstärkungselements nur teilweise bedeckt. Beispielsweise kann das Verstärkungselement randseitig überlappend von der Tragstruktur umrahmt sein, während ein Teil der der Barrierefolie abgewandten Seite des Verstärkungselements freiliegt und nicht von der Tragstruktur bedeckt ist. Damit kann der Materialeinsatz der Tragstruktur geringgehalten und Gewicht eingespart werden.

Gemäß einer weiteren Ausgestaltung des Flüssigkeitsbehälters ist vorgesehen, dass die Schale eine erste Halbschale ist, die zusammen mit einer zweiten Halbschale das Vorratsvolumen begrenzt, wobei die zweite Halbschale einen Wandungsaufbau mit einer Barrierefolie, einem Verstärkungselement und einer Tragstruktur aufweist. Es versteht sich, dass die erste Halbschale und die zweite Halbschale in ihrer Geometrie voneinander abweichen können.

Bei der ersten Halbschale kann es sich um eine Unterschale handeln, die im fertig montierten Zustand fahrbahnseitig in einem Fahrzeug angeordnet ist. Bei der zweiten Halbschale kann es sich um eine Oberschale handeln, die fahrzeugseitig, auf einer der Fahrbahn abgewandten Seite des Flüssigkeitsbehälters angeordnet ist.

Die Halbschalen können entlang eines umfangsseitig umlaufenden Kragens stoffschlüssig miteinander verbunden sein, insbesondere miteinander verschweißt sein.

Gemäß weiterer Ausgestaltungen des Flüssigkeitsbehälters kann vorgesehen sein, dass lediglich die erste Schale ein Verstärkungselement aufweist, während die zweite Schale kein Verstärkungselement aufweist. So kann es für die Formbeständigkeit und Crashsicherheit des Flüssigkeitsbehälters bereits ausreichend sein, lediglich beispielswese eine Unterschale des Flüssigkeitsbehälters mithilfe eines einzelnen oder mehrerer Verstärkungselemente strukturell zu verstärken.

Die Barriereschichten der Halbschalen können eine im Wesentlichen geschlossene Barriereblase bilden, die das Vorratsvolumen im Wesentlichen vollständig einfassen. Die Formulierung "im Wesentlichen vollständig" trägt hierbei dem Umstand Rechnung, dass ein Flüssigkeitsbehälter in einem Kraftfahrzeug in der Regel eine oder mehrere Entnahmeöffnungen und/oder Einfüllöffnungen und/oder Entlüftungsöffnungen hat, um das Antriebssystem mit der bevorrateten Flüssigkeit zu versorgen. Weiter können Öffnungen oder Wandungsdurchbrüche zum Durchführen elektrischer Leitungen oder für ein Gebermodul vorgesehen sein. Im Bereich einer derartigen Öffnung ist eine Barriereschicht lokal unterbrochen oder durchbrochen. Die Formulierung, dass die Barriereschichten das Vorratsvolumen im Wesentlichen vollständig einfassen, beschreibt insbesondere die Vermeidung eines Permeationspfads in einem Verbindungbereich zwischen den Halbschalen. Es können demnach die Wandung einer Halbschale durchdringende Anschlussöffnungen vorgesehen sein. Derartige Anschlussöffnungen und zugeordnete Anschlussgeometrien, wie Schlauchanschlüsse oder dergleichen, können im Spritzgussverfahren hergestellt worden sein und demnach integraler Bestandteil einer Halbschale sein.

Nach einer weiteren Ausgestaltung des Flüssigkeitsbehälters ist vorgesehen, dass das Verstärkungselement Verstärkungsfasern aufweist, die in eine thermoplastische Kunststoffmatrix eingebettet sind, wobei die Verstärkungsfasern Glasfasern und/oder Aramidfasern und/oder Kohlenstofffasern oder dergleichen aufweisen, oder die Verstärkungsfasern aus Glasfasern und/oder Aramidfasern und/oder Kohlenstofffasern oder dergleichen bestehen. So kann das Verstärkungselement, je nach Anwendungsfall und Position am Flüssigkeitsbehälter, optimal an die zu erwartenden Betriebslasten und Umgebungsbedingungen angepasst sein.

Alternativ oder ergänzend kann vorgesehen sein, dass das Verstärkungselement Verstärkungsfasern aufweist, die in eine thermoplastische Kunststoffmatrix eingebettet sind, mit der Kunststoffmatrix aufweisend oder bestehend aus Polyamid (z.B. PA6, PA66, PA12 oder Polyphthalamid (PPA)), Polyolefin (z.B. Polypropylen (PP) oder Polyethylen (PE)), Polyurethan (PU, insbesondere thermoplastisches Polyurethan (TPU)), Polyphenylensulfid (PPS) oder dergleichen. Auf diese Weise kann das Verstärkungselement, je nach Anwendungsfall und Position am Flüssigkeitsbehälter, optimal an die zu erwartenden Betriebslasten und Umgebungsbedingungen angepasst sein.

Alternativ oder ergänzend kann vorgesehen sein, dass das Verstärkungselement einen langfaserverstärkten oder endlosfaserverstärkten Faserverbundkunststoff aufweist oder aus einem langfaserverstärkten oder endlosfaserverstärkten Faserverbundkunststoff besteht. So kann das Verstärkungselement, je nach Anwendungsfall und Position am Flüssigkeitsbehälter, optimal an die zu erwartenden Betriebslasten und Umgebungsbedingungen angepasst sein.

Alternativ oder ergänzend kann vorgesehen sein, dass die Tragstruktur HDPE aufweist oder aus HDPE besteht oder ein schlagzäh modifiziertes Polyamid aufweist oder aus einem schlagzäh modifizierten Polyamid besteht. Damit kann die Tragstruktur, je nach Anwendungsfall und Position am Flüssigkeitsbehälter, optimal an die zu erwartenden Betriebslasten und Umgebungsbedingungen angepasst sein.

Alternativ oder ergänzend kann vorgesehen sein, dass das Verstärkungselement ein Organoblech aufweist oder ein Organoblech ist. Es können zwei oder mehr Organoblech aufweisende oder aus Organoblech bestehende Verstärkungselemente vorgesehen sein. Bei der Verwendung von Organoblech kann auf bestehende und bereits bekannte Materialkombinationen und Halbzeuge zurückgegriffen werden.

Alternativ oder ergänzend kann vorgesehen sein, dass das Verstärkungselement ein unidirektional verstärktes Band aufweist oder ein unidirektional verstärktes Band ist. So können beispielsweise eine oder mehrere Lagen eines Carbongewebebands als Verstärkungselement eingesetzt werden. Durch die in der Regel biegeschlaffe Struktur eines solchen Bands oder Tapes kann das Band oder Tape in einfacher Weise an die vorgesehene Kontur der Schale angepasst werden.

Das unidirektional verstärkte Band kann seitlich aus der Schale austreten, um eine Lasche zur Befestigung des Flüssigkeitsbehälters an einer tragenden Struktur zu bilden. So können beispielsweise entgegengesetzte Enden des Bands zweiseitig aus der Schale austreten, um eine Befestigung oder Vorfixierung des Behälters an einer Tragstruktur zu ermöglichen.
Es kann vorgesehen sein, dass die Barrierefolie, die Tragstruktur und das Verstärkungselement jeweils einen wechselseitig chemisch und thermisch kompatiblen Werkstoff aufweisen, um eine zuverlässige stoffschlüssige Verbindung untereinander zu gewährleisten.

Es kann z.B. ein Flüssigkeitsbehälter angegeben werden, wobei die Tragstruktur den Werkstoff PA6 (Polyamid-6) aufweist oder aus PA6 besteht, wobei das Verstärkungselement glasfaserverstärktes PA6 aufweist oder das Verstärkungselement aus glasfaserverstärktem PA6 besteht und wobei die Barrierefolie Deckschichten hat, die PA6 aufweisen oder aus PA6 bestehen, und wobei die Deckschichten der Barrierefolie eine zentrale Schicht der Barrierefolie einfassen, wobei die zentrale Schicht der Barrierefolie EVOH aufweist oder aus EVOH besteht.

Alternativ kann ein Flüssigkeitsbehälter angegeben werden, wobei die Tragstruktur den Werkstoff HDPE aufweist oder aus HDPE besteht, wobei das Verstärkungselement glasfaserverstärktes HDPE aufweist oder das Verstärkungselement aus glasfaserverstärktem HDPE besteht und wobei die Barrierefolie Deckschichten hat, die HDPE aufweisen oder aus HDPE bestehen, wobei die Deckschichten der Barrierefolie eine zentrale Schicht der Barrierefolie einfassen, wobei die zentrale Schicht EVOH aufweist oder aus EVOH besteht, und wobei zwischen der zentralen Schicht und einer jeweiligen Deckschicht jeweils eine Haftvermittlerschicht der Barrierefolie angeordnet ist, wobei die Haftvermittlerschichten jeweils LLDPE aufweisen oder aus LLDPE bestehen.

Alternativ kann ein Flüssigkeitsbehälter angegeben werden, wobei die Tragstruktur den Werkstoff HDPE aufweist oder aus HDPE besteht, wobei das Verstärkungselement glasfaserverstärktes PA6 aufweist oder das Verstärkungselement aus glasfaserverstärktem PA6 besteht und wobei die Barrierefolie Deckschichten hat, die HDPE aufweisen oder aus HDPE bestehen, wobei die Deckschichten der Barrierefolie eine zentrale Schicht der Barrierefolie einfassen, wobei die zentrale Schicht EVOH aufweist oder aus EVOH besteht und wobei zwischen der zentralen Schicht und einer jeweiligen Deckschicht jeweils eine Haftvermittlerschicht der Barrierefolie angeordnet ist, wobei die Haftvermittlerschichten jeweils LLDPE aufweisen oder aus LLDPE bestehen, und wobei zwischen dem Verstärkungselement und der Barrierefolie und/oder dem Verstärkungselement und der Tragstruktur eine Haftvermittlerschicht vorgesehen ist, wobei die Haftvermittlerschicht LDPE oder LLDPE aufweist oder aus LPDE oder LLDPE besteht.

Das Verstärkungselement kann eine im Wesentlichen ebene Platte sein, die Teil einer das Vorratsvolumen begrenzenden boden- oder deckenseitigen Wandung ist, wobei die Tragstruktur einen zumindest abschnittsweise gekrümmten Übergang der boden- oder deckenseitigen Wandung zu einer das Vorratsvolumen begrenzenden Seitenwandung ausbildet. Demnach kann die Tragstruktur stark gekrümmte, im Spritzguss hergestellte Bereiche aufweisen, um den Übergang zwischen einer boden- oder deckenseitigen Wandung zu einer Seitenwandung zu bilden. Somit kann auf eine Verformung des Verstärkungselements verzichtet werden.

Alternativ kann vorgesehen sein, dass das Verstärkungselement nach Art einer Freiformfläche in einer, zwei oder drei Raumrichtungen gekrümmt und Teil einer das Vorratsvolumen begrenzenden boden- oder deckenseitigen Wandung ist. So kann das Verstärkungselement an die jeweils erforderliche Geometrie des Flüssigkeitsbehälters bzw. an den zur Verfügung stehenden Bauraum im fertig montierten Zustand angepasst sein.

Gemäß einem zweiten Aspekt betrifft die Erfindung ein Verfahren zum Herstellen eines Flüssigkeitsbehälters, mit den Verfahrensschritten:
- Bereitstellen einer Barrierefolie;
- Bereitstellen eines Verstärkungselements, das zumindest teilweise oder vollständig aus einem thermoplastischen Faserverbundwerkstoff gebildet ist;
- stoffschlüssiges Verbinden der Barrierefolie mit dem Verstärkungselement;
- Spritzgießen einer Tragstruktur, wobei ein stoffschlüssiges Verbinden der Tragstruktur mit dem Verstärkungselement und ein stoffschlüssiges Verbinden der Tragstruktur mit der Barrierefolie erfolgt.

Die Reihenfolge der voranstehenden Aufzählung der Verfahrensschritte gibt keine Reihenfolge der Verfahrensschritte für die tatsächliche Prozessführung vor. So können das Bereitstellen der Barrierefolie und des Verstärkungselements gleichzeitig oder aufeinanderfolgend stattfinden. Dies gilt gleichermaßen für alle nachstehend genannten Verfahrensschritte, die in ihrer Reihenfolge, soweit sinnvoll, frei kombinierbar sind und/oder zeitgleich ablaufen können.

Dadurch, dass der Spritzgusswerkstoff gezielt mit funktionsoptimierten Elementen kombiniert wird, kann ein leicht bauender Flüssigkeitsbehälter hergestellt werden, der formbeständig, crashsicher sowie emissionsminimiert ist. Die Barrierefunktion kommt hierbei im Wesentlichen der Barrierefolie zu. Es versteht sich, dass alle weiteren das Vorratsvolumen einfassenden Komponenten ebenfalls grundsätzlich eine Barrierewirkung aufweisen, die jedoch geringer ist, als die Barrierewirkung der Barrierefolie. Das Verstärkungselement und die Tragstruktur sorgen für die Formbeständigkeit und Crashsicherheit des mit dem erfindungsgemäßen Verfahren hergestellten Flüssigkeitsbehälters.

Es kann vorgesehen sein, dass das Vorratsvolumen des Flüssigkeitsbehälters im Wesentlichen von zwei miteinander verbundenen Halbschalen begrenzt wird, wobei eine erste Halbschale eine innenliegende, auf einer dem Vorratsvolumen zugewandten Seite angeordnete Barrierefolie hat und eine zweite Halbschale ebenfalls eine innenliegende, auf einer dem Vorratsvolumen zugewandten Seite angeordnete Barrierefolie hat. Auf diese Weise können die Barrierefolien zuverlässig vor mechanischer Beanspruchung und Umgebungseinflüssen geschützt werden.

Alternativ kann vorgesehen sein, dass das Vorratsvolumen des Flüssigkeitsbehälters im Wesentlichen von zwei miteinander verbundenen Halbschalen begrenzt wird, wobei eine erste Halbschale eine innenliegende, auf einer dem Vorratsvolumen zugewandten Seite angeordnete Barrierefolie hat und eine zweite Halbschale eine außenliegende, auf einer dem Vorratsvolumen abgewandten Seite angeordnete Barrierefolie hat. Auf diese Weise kann eine der Barrierefolien, und zwar die innenliegende Barrierefolie, zuverlässig vor mechanischer Beanspruchung und Umgebungseinflüssen geschützt werden. Hierbei kann es sich im Falle eines Kunststoffkraftstoffbehälters beispielsweise um eine im fertig montierten Zustand der Fahrbahn zugewandte Unterschale handeln, wobei die innenliegende Anordnung der Barrierefolie z.B. einen Schutz der Barrierefolie vor Steinschlag bietet. Die außenliegende Barrierefolie ermöglicht das Anbringen von Funktionseinheiten auf einer der außenliegenden Barrierefolie abgewandten Innenseite der betreffenden Halbschale, so dass in das Vorratsvolumen ragende Funktionseinheiten befestigt werden können, ohne die strukturelle Integrität der Barrierefolie zu beeinträchtigen. Im Falle eines Kunststoffkraftstoffbehälters kann es sich hierbei insbesondere um eine Oberschale handeln, die im fertig montierten Zustand auf einer der Fahrbahn abgewandten Seite des Kunststoffkraftstoffbehälters angeordnet ist. Für eine solche Oberschale ist die Beschädigung der außenliegenden Barrierefolie durch Steinschlag weniger wahrscheinlich, da die Unterschale zwischen der Barrierefolie und der Fahrbahn angeordnet ist und die Barriereschicht damit gegenüber der Fahrbahn abschirmt.

Alternativ kann vorgesehen sein, dass das Vorratsvolumen des Flüssigkeitsbehälters im Wesentlichen von zwei miteinander verbundenen Halbschalen begrenzt wird, wobei eine erste Halbschale eine außenliegende, auf einer dem Vorratsvolumen abgewandten Seite angeordnete Barrierefolie hat und eine zweite Halbschale ebenfalls eine außenliegende, auf einer dem Vorratsvolumen abgewandten Seite angeordnete Barrierefolie hat. Hierdurch können auf dem Vorratsvolumen zugewandten Innenseiten der Halbschalen jeweils Funktionseinheiten angeordnet werden, ohne die strukturelle Integrität der Barrierefolien zu beeinträchtigen.

Unabhängig von einer außenliegenden und/oder innenliegenden Anordnung der Barrierefolien können die Barrierefolien eine im Wesentlichen geschlossene Barriereblase bilden, wobei die Barriereblase im Falle eines Kunststoffkraftstoffbehälters lediglich im Bereich von Öffnungen zur Flüssigkeitszufuhr und/oder -entnahme oder zur Entlüftung lokal unterbrochen ist. Insbesondere können die Barrierefolien im Bereich einer Nahtstelle zwischen zwei Halbschalen im Wesentlichen spaltfrei aneinander anliegen oder miteinander verschweißt sein.

Alternativ können die Barrierefolien im Bereich einer Nahtstelle zwischen zwei Halbschalen einen Abstand zueinander aufweisen, wobei ein Permeationspfad gebildet ist. Im Falle eines Kunststoffkraftstoffbehälters sollte ein solcher Permeationspfad möglichst schmal und länglich ausgebildet sein, um die gesetzlich vorgegebenen Emissionsgrenzwerte einzuhalten. So kann beispielsweise vorgesehen sein, dass in einem Querschnitt betrachtet eine Länge des Permeationspfads größer oder gleich dem Zweifachen der Breite des Permeationspfads ist, wobei die Breite des Permeationspfads dem Abstand der den Permeationspfad begrenzenden Barrierefolien entspricht und die Länge quer zur Breite gemessen wird.

Nach einer weiteren Ausgestaltung des Verfahrens ist vorgesehen, dass das Bereitstellen der Barrierefolie folgende Verfahrensschritte aufweist:
- Thermoformen der Barrierefolie und
- Positionieren und Fixieren der Barrierefolie in einem Spritzgusswerkzeug,
- wobei das Thermoformen der Barrierefolie vor dem Positionieren der Barrierefolie im Spritzgusswerkzeug und/oder nach dem Positionieren der Barrierefolie im Spritzgusswerkzeug erfolgt.

Demnach kann die Barrierefolie bereits vor dem Positionieren teilweise oder vollständig in die für das Anspritzen oder Hinterspritzen vorgesehene Form gebracht werden. Hierzu wird die Barrierefolie außerhalb des Spritzgusswerkzeugs mittels einer vom Spritzgusswerkzeug separaten Vorrichtung erwärmt und umgeformt. Beispielsweise kann die Barrierefolie kontaktlos erwärmt werden, insbesondere mittels eines Infrarotstrahlers oder dergleichen, und nach dem Erwärmen oder während des Erwärmens tiefgezogen werden. Damit kann auf ein Tiefziehen der Barrierefolie innerhalb des Spritzgusswerkzeugs ganz oder zumindest teilweise verzichtet werden.

Es kann daher in einer vom Spritzgusswerkzeug separaten Vorrichtung eine Formgebung der Barrierefolie erfolgen, die die Barrierefolie in die für den Spritzguss vorgesehene Form bringt, so dass die Barrierefolie im Spritzgusswerkzeug als Einleger lediglich angespritzt oder hinterspritzt wird. Alternativ kann die Barrierefolie in einer von dem Spritzgusswerkzeug separaten Vorrichtung vorgeformt werden und in einem weiteren Formvorgang innerhalb des Spritzgusswerkzeugs in die für das Anspritzen oder Hinterspritzen vorgesehene Form gebracht werden. So kann die Barrierefolie als ein teilweise vorgeformter Einleger im Spritzgusswerkzeug positioniert und gegen eine Werkzeughälfte tiefgezogen werden.

Alternativ kann vorgesehen sein, dass das Thermoformen der Barrierefolie vollständig innerhalb des Spritzgusswerkzeugs erfolgt. Damit kann auf eine zusätzliche, vom Spritzgusswerkzeug separate Vorrichtung zur Formgebung der Barrierefolie verzichtet werden.

Nach einer weiteren Ausgestaltung des Verfahrens ist vorgesehen, dass das Positionieren der Barrierefolie in dem Spritzgusswerkzeug über eine Rolle-zu-Rolle-Zuführung erfolgt. Hierbei können, zur Zuführung der Barrierefolie in das Spritzgusswerkzeug, wenigstens zwei Rollen seitlich zu einer Werkzeughälfte des Spritzgusswerkzeugs angeordnet sein, um die Barrierefolie in einen Bereich zwischen den Werkzeughälften des Spitzgusswerkzeugs zu fördern. Eine erste Rolle ist dabei einer ersten Seite der betreffenden Werkzeughälfte zugeordnet, während eine zweite Rolle einer der ersten Seite abgewandten, zweiten Seite der Werkzeughälfte zugeordnet ist. Die Rolle-zu-Rolle-Zuführung ermöglicht insbesondere, die Barrierefolie für einen anschließenden Tiefziehvorgang innerhalb des Spritzgusswerkzeugs vorzuspannen.

Alternativ oder ergänzend kann vorgesehen sein, dass die Fixierung der Barrierefolie an dem Spritzgusswerkzeug mittels eines Halterahmens erfolgt. Der Halterahmen kann einen an einer Werkzeughälfte befestigten Aktuator zum Öffnen und Schließen des Halterahmens aufweisen. Damit kann die Barrierefolie in einfacher Weise form- und/oder kraftschlüssig an einer Werkzeughälfte des Spritzgusswerkzeugs festgelegt werden.

Alternativ oder ergänzend kann vorgesehen sein, dass die Fixierung und das Thermoformen der Barrierefolie durch die Erzeugung eines Unterdrucks im Spritzgusswerkzeug erfolgen. So kann eine Werkzeughälfte, an der die Barrierefolie gehalten und geformt, insbesondere tiefgezogen, werden soll, Vakuumbohrungen zum Ansaugen der Barrierefolie gegen eine Werkzeugoberfläche der betreffenden Werkzeughälfte aufweisen. Alternativ oder ergänzend zu den Vakuumbohrungen kann eine Werkzeughälfte, an der die Barrierefolie fixiert und geformt, insbesondere tiefgezogen, werden soll, zumindest teilweise oder vollständig aus einem luftdurchlässigem, porösen Werkstoff bestehen.

Nach einer weiteren Ausgestaltung des Verfahrens ist vorgesehen, dass das stoffschlüssige Verbinden der Barrierefolie mit dem Verstärkungselement folgende Verfahrensschritte aufweist:
- Aufheizen des Verstärkungselements auf eine Temperatur, die größer oder gleich einer Schmelztemperatur einer Kunststoffmatrix des Verstärkungselements ist,
- wobei das Aufheizen des Verstärkungselements vor und/oder während des Bereitstellens der Barrierefolie erfolgt;
- Bewegen des Verstärkungselements in einen Bereich zwischen eine erste, die Barrierefolie aufnehmende Werkzeughälfte und eine zweite, insbesondere düsenseitige Werkzeughälfte,
- wobei das Verstärkungselement während oder nach dem Aufheizen zwischen die Werkzeughälften bewegt wird;
- stoffschlüssiges Verbinden des Verstärkungselements mit der Barrierefolie durch ein Andrücken des aufgeheizten Verstärkungselements an eine der ersten Werkzeughälfte abgewandte Seite der Barrierefolie.

Dadurch, dass die Barrierefolie beim Andrücken des aufgeheizten Verstärkungselements zwischen der die Barrierefolie aufnehmenden Werkzeughälfte und dem Verstärkungselement angeordnet ist, weist das Verstärkungselement keinen unmittelbaren Kontakt zu der die Barrierefolie aufnehmenden Werkzeughälfte auf. Auf diese Weise kann ein Abkühlen des Verstärkungselements im Vergleich zu einer unmittelbaren Anlage desselben an eine Werkzeughälfte vermindert werden, indem die Barrierefolie das Verstärkungselement gegenüber der die Barrierefolie aufnehmenden Werkzeughälfte thermisch isoliert. Auf diese Weise kann einerseits eine zuverlässige stoffschlüssige Verbindung zwischen der Barrierefolie und dem Verstärkungselement gebildet werden. Andererseits wird zusätzlich das Ausbilden einer stoffschlüssigen Verbindung zwischen dem Verstärkungselement und in das Spritzgusswerkzeug eingespritztem Spritzgusswerkstoff begünstigt, da das Verstärkungselement nicht durch den Kontakt mit der die Barrierefolie tragenden Werkzeughälfte abgekühlt wird.

Weiter kann durch eine einseitige Anlage der Barrierefolie an einer Oberfläche einer Werkzeughälfte eine Kühlung und Fixierung der Barrierefolie erreicht werden, so dass das Risiko einer Beschädigung der Folie durch den Spritzguss und die damit verbundenen hohen Temperaturen und Scherkräfte reduziert wird.

Das Aufheizen der Barrierefolie und/oder des Verstärkungselements kann jeweils durch eine berührungslose Aufheizvorrichtung, wie einen Infrarotstrahler oder dergleichen, erfolgen. Dem Verstärkungselement kann demnach ein Infrarotstrahler zum Aufheizen des Verstärkungselements zugordnet sein.

Eine berührungslose Aufheizvorrichtung zum Aufheizen des Verstärkungselements kann mit einem Abstand zu dem Spritzgusswerkzeug angeordnet sein, so dass das Verstärkungselement aufgeheizt wird, bevor es in einen Bereich zwischen den Werkzeughälften des Spritzgusswerkzeugs bewegt wird. Auf diese Weise kann ein Verstärkungselement zeitgleich zu einem laufenden Spritzgusszyklus für den nachfolgenden Spritzgusszyklus vorbereitet werden.

Alternativ oder ergänzend kann die berührungslose Aufheizvorrichtung an einem Handling zum Greifen und Bewegen des Verstärkungselements angeordnet sein. Damit kann das Verstärkungselement aufgeheizt werden, bevor es in einen Bereich zwischen den Werkzeughälften des Spritzgusswerkzeugs bewegt wird und insbesondere zeitgleich zu einem laufenden Spritzgusszyklus, und zudem auch weiter aufgeheizt werden, während das Verstärkungselement in einen Bereich zwischen geöffneten Werkzeughälften des Spritzgusswerkzeugs bewegt wird. Auf diese Weise kann auch die Transportzeit des Verstärkungselements von einer Warteposition hin zu einer Andrückposition zwischen den Formhälften des Werkzeugs genutzt werden, um das Verstärkungselement weiter aufzuheizen oder einen Temperaturabfall während des Bereitstellens aus einer Warteposition in die Andrückposition zu vermeiden. Die Andrückposition ist hierbei eine Position des Verstärkungselements zwischen Formhälften der Spritzgussform, aus der das Verstärkungselement zum Andrücken an die Barrierefolie in Richtung der Barrierefolie bewegbar ist oder umgekehrt. Die Warteposition ist eine Position des Verstärkungselements außerhalb des Spritzgusswerkzeugs, in der das Verstärkungselement während eines Spritzgusszyklus für einen nachfolgenden Spritzgusszyklus bereitgehalten wird.

Der Barrierefolie kann ein weiterer Infrarotstrahler zum Aufheizen der Barrierefolie zugordnet sein.

Eine berührungslose Aufheizvorrichtung zum Aufheizen der Barrierefolie kann bei an einer Werkzeughälfte des Spritzgusswerkzeugs anliegenden Barrierefolie zwischen den Formhälften des Spritzgusswerkzeugs bewegbar sein. So kann die Barrierefolie vor dem Andrücken des aufgeheizten Verstärkungselements durch eine Heizeinrichtung erwärmt werden.

Dabei kann ein Wärmeeintrag der Heizeinrichtung zum Erwärmen bzw. Aufheizen der Barrierefolie ergänzend zu einer Restwärme in die Barrierefolie eingebracht werden, wobei die Restwärme aus einem vorangehenden Thermoformen der Barrierefolie resultiert. So kann eine zuverlässige stoffschlüssige Verbindung zwischen der Barrierefolie und dem Verstärkungselement gebildet werden.

Alternativ kann die Barrierefolie allein durch eine Restwärme aus einem vorangehenden Thermoformen der Barrierefolie eine ausreichende Temperatur zum stoffschlüssigen Verbinden mit dem aufgeheizten Verstärkungselement aufweisen, ohne dass ein zusätzliches bzw. erneutes Aufheizen oder Erwärmen nach dem Thermoformen der Barrierefolie erforderlich ist.

Das Verstärkungselement und die Barrierefolie können über einen gemeinsam genutzten, einzelnen Infrarotstrahler aufgeheizt werden.

Nachfolgend wird die Erfindung anhand einer Ausführungsbeispiele darstellenden Zeichnung näher beschrieben. Es zeigen jeweils schematisch:
- Fig. 1: einen erfindungsgemäßen Flüssigkeitsbehälter in einem Querschnitt;
- Fig. 2: einen weiteren erfindungsgemäßen Flüssigkeitsbehälter in einem Querschnitt;
- Fig. 3: einen Verfahrensschritt des erfindungsgemäßen Verfahrens;
- Fig. 4: einen weiteren Verfahrensschritt des erfindungsgemäßen Verfahrens;
- Fig. 5: einen weiteren Verfahrensschritt des erfindungsgemäßen Verfahrens;
- Fig. 6: einen weiteren Verfahrensschritt des erfindungsgemäßen Verfahrens.

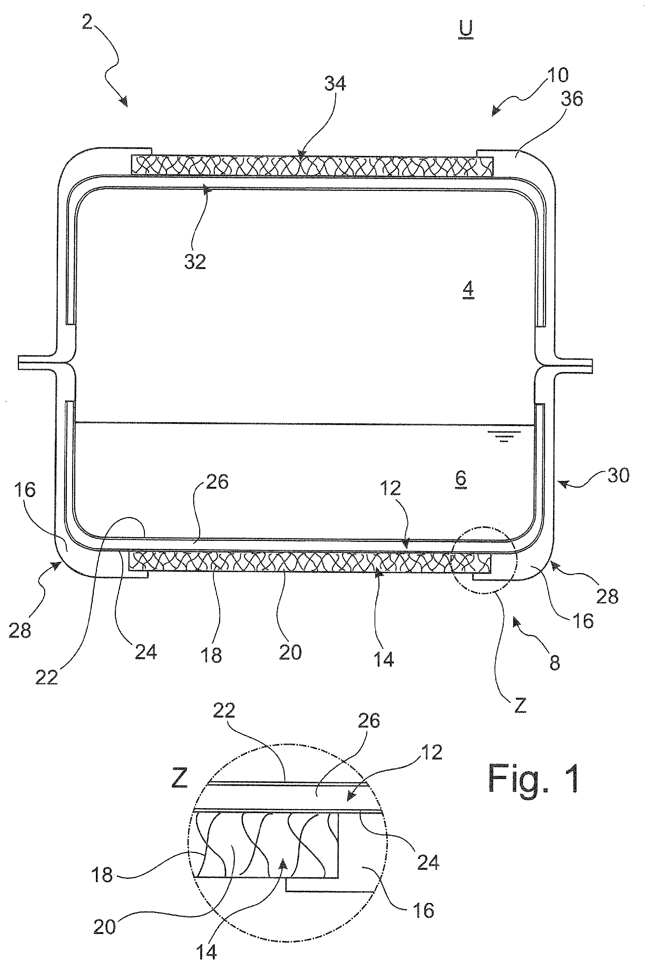

Fig. 1 zeigt einen Flüssigkeitsbehälter 2 für ein Kraftfahrzeug. Der Flüssigkeitsbehälter 2 ist vorliegend ein Kunststoffkraftstoffbehälter 2. Der Flüssigkeitsbehälter 2 hat ein Vorratsvolumen 4 zur Bevorratung einer Flüssigkeit 6. Bei der Flüssigkeit 6 handelt es sich vorliegend um Kraftstoff 6 für ein verbrennungsmotorisch angetriebenes Fahrzeug.

Der Flüssigkeitsbehälter 2 hat eine erste Halbschale 8 und eine zweite Halbschale 10, die das Vorratsvolumen 4 begrenzen. Die Halbschalen 8, 10 sind jeweils im Spritzgussverfahren hergestellt worden. Der strukturelle Wandungsaufbau der Halbschalen 8, 10 wird nachfolgend exemplarisch für die Halbschale 8 beschrieben.

Die Halbschale 8 weist eine Barrierefolie 12 auf, die als Permeationsbarriere zur Minimierung der Permeation von Kohlenwasserstoffen aus dem Vorratsvolumen 4 in eine Umgebung U eingerichtet ist.

Die Halbschale 8 weist ein Verstärkungselement 14 auf, das aus einem thermoplastischen Faserverbundwerkstoff gebildet ist.

Die Halbschale 8 weist weiter eine Tragstruktur 16 auf, die aus einem Spritzgusswerkstoff gebildet ist.

Vorliegend ist die Halbschale 8 im Spritzgussverfahren hergestellt worden, indem die Barrierefolie 12 und das Verstärkungselement 14 als Einleger in einem Spritzgusswerkzeug positioniert worden sind und mit dem Spritzgusswerkstoff der Tragstruktur 16 angespritzt worden sind.

Die Barrierefolie 12 ist stoffschlüssig mit dem Verstärkungselement 14 verbunden. Hierzu sind die Barrierefolie 12 und das Verstärkungselement 14 erwärmt und miteinander verschweißt worden.

Die Barrierefolie 12 ist stoffschlüssig mit der Tragstruktur 16 verbunden. Die Barrierefolie 12 ist mit der Tragstruktur 16 durch den Spritzguss verschweißt worden.

Das Verstärkungselement 14 ist stoffschlüssig mit der Tragstruktur 16 verbunden. Das Verstärkungselement 14 ist mit der Tragstruktur 16 durch den Spritzguss verschweißt worden.

Das Verschweißen der Barrierefolie 12 und des Verstärkungselements 14 jeweils mit der Tragstruktur 16 ist durch das Anspritzen des Spritzgusswerkstoffs der Tragstruktur 16 an das Verstärkungselement 14 und die Barrierefolie 12 innerhalb eines Spritzgusswerkzeugs erreicht worden.

Die Verschweißung zwischen der Barrierefolie 12 und dem Verstärkungselement 14 ist vor dem Anspritzen der Tragstruktur 16 hergestellt worden. Wie der Vergrößerung Z zu entnehmen ist, ist das Verstärkungselement 14 zumindest abschnittsweise zwischen der Barrierefolie 12 und der Tragstruktur 16 angeordnet.

Es versteht sich, dass gemäß weiterer Ausführungsbeispiele der Erfindung eine Schale eine Mehrzahl von Verstärkungselementen aufweisen kann, die einander überlappen oder zueinander beabstandet angeordnet sein können. Weiter versteht sich, dass gemäß weiterer Ausführungsbeispiele der Erfindung die Tragstruktur mehrteilig gebildet sein kann und beispielsweise separate, zueinander beabstandete Segmente lokaler Anspritzungen von Spritzgusswerkstoff an der Barrierefolie und/oder dem Verstärkungselement aufweisen kann.

Das Verstärkungselement 14 weist vorliegend Verstärkungsfasern 18 auf, die in eine thermoplastische Kunststoffmatrix 20 eingebettet sind. Vorliegend sind Glasfasern 18 als Verstärkungsfasern 18 vorgesehen. Gemäß alternativer Ausführungsbeispiele der Erfindung können alternativ oder ergänzend Aramidfasern und/oder Kohlenstofffasern als Verstärkungsfasern eingesetzt werden.

Die thermoplastische Kunststoffmatrix 20 des Verstärkungselements 14 besteht vorliegend aus einem Polyamid (PA). Das Verstärkungselement 14 ist vorliegend langfaserverstärkt. Die Tragstruktur 16 besteht vorliegend ebenfalls aus einem Polyamid (PA).

Im Speziellen besteht die Tragstruktur 16 vorliegend aus dem Werkstoff PA6, wobei das Verstärkungselement 14 aus glasfaserverstärktem PA6 besteht. Die Barrierefolie 12 hat Deckschichten 22, 24, die aus PA6 bestehen und eine zentrale Schicht 26 der Barrierefolie 12 einfassen, wobei die zentrale Schicht 26 aus EVOH besteht.

Das Verstärkungselement 14 ist eine im Wesentlichen ebene Platte 14. Das Verstärkungselement 14 der Halbschale 8 ist somit Teil einer das Vorratsvolumen 4 begrenzenden bodenseitigen Wandung der Halbschale 8.

Die Tragstruktur 16 bildet einen gekrümmten Übergang 28 der bodenseitigen Wandung zu einer das Vorratsvolumen 4 begrenzenden Seitenwandung 30 des Flüssigkeitsbehälters 2.

Die Halbschale 10 weist ebenfalls einen Wandungsaufbau aus einer Barrierefolie 32, einem Verstärkungselement 34 und einer Tragstruktur 36 auf.

Es versteht sich, dass der Flüssigkeitsbehälter 2 in bekannter Weise in dem Vorratsvolumen angeordnete Funktionseinheiten, wie Pumpen, Hebelgeber, Ventile oder dergleichen aufweisen kann, die hier zur Verbesserung der Übersichtlichkeit nicht dargestellt sind.

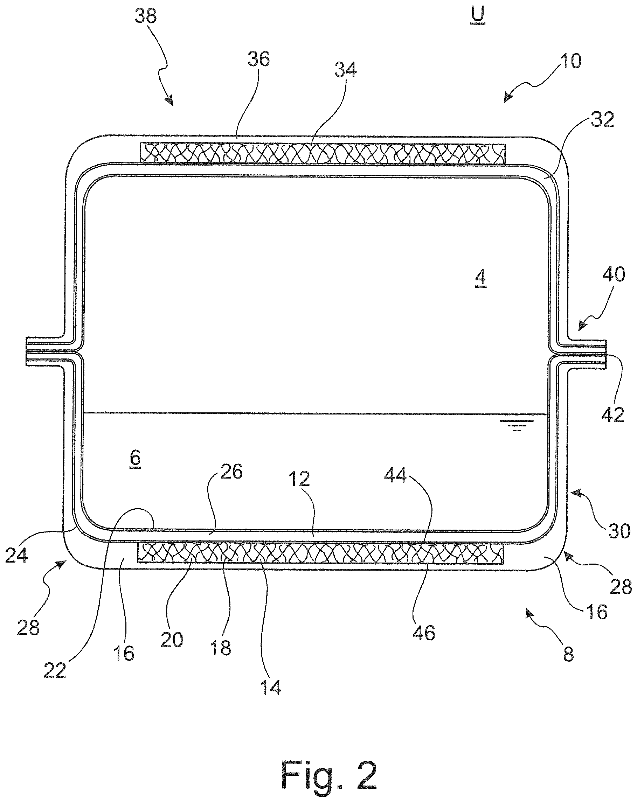

Fig. 2 zeigt eine weitere Ausführung eines erfindungsgemäßen Flüssigkeitsbehälters 38 in einem Querschnitt. Zur Vermeidung von Wiederholungen wird im Hinblick auf Fig. 2 lediglich auf die Unterschiede zu dem voranstehend beschriebenen Ausführungsbeispiel der Fig. 1 eingegangen, wobei gleichen Merkmalen gleiche Bezugszeichen zugeordnet werden.

Die Barrierefolien 12, 32 der Halbschalen 8, 10 sind gemäß der Variante der Fig. 2 bis in einen zwischen den Halbschalen 8, 10 gebildeten Verbindungsbereich 40 erstreckt, wobei die Halbschalen 8, 10 entlang eines umfangsseitig umlaufenden Kragens 42 miteinander verschweißt worden sind.

Die Barrierefolien 12, 32 sind in dem Verbindungsbereich 40 ebenfalls stoffschlüssig miteinander verbunden, so dass die Barrierefolien 12, 32 eine im Wesentlichen geschlossene Barriereblase bilden. Die Formulierung "im Wesentlichen geschlossen" trägt dabei wiederum dem Umstand Rechnung, dass der gezeigte Flüssigkeitsbehälter 38, der ein Kunststoffkraftstoffbehälter 38 ist, die obligatorischen Zu- und Abgangsöffnungen zum Befüllen, Entlüften und zur Flüssigkeitsentnahme aufweist, im Bereich derer eine Barriereschicht jeweils unterbrochen bzw. durchbrochen ist, um einen Fluidtransfer zu ermöglichen. Weiter können Öffnungen oder Wandungsdurchbrüche zum Durchführen elektrischer Leitungen oder für ein Gebermodul vorgesehen sein.

Wie Fig. 2 zu entnehmen ist, ist eine erste Seite 44 des Verstärkungselements 14 vollständig von der Barrierefolie 12 bedeckt. Weiter ist eine der ersten Seite 44 abgewandte Seite 46 des Verstärkungselements 14 vollständig von der Tragstruktur 16 bedeckt.

Gemäß der Variante der Fig. 2 ist das Verstärkungselement 14 demnach vollständig zwischen der Barrierefolie 12 und der Tragstruktur 16 eingebettet und so vor Umgebungseinflüssen geschützt. Dies gilt gleichermaßen für das Verstärkungselement 34 der Halbschale 10, das ebenfalls vollständig von der Tragstruktur 36 und der Barrierefolie 32 eingefasst ist.

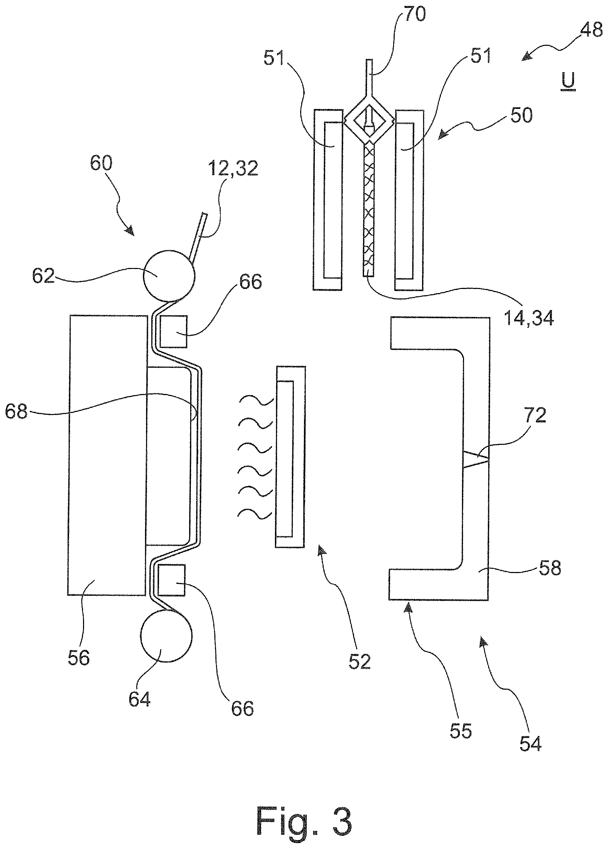

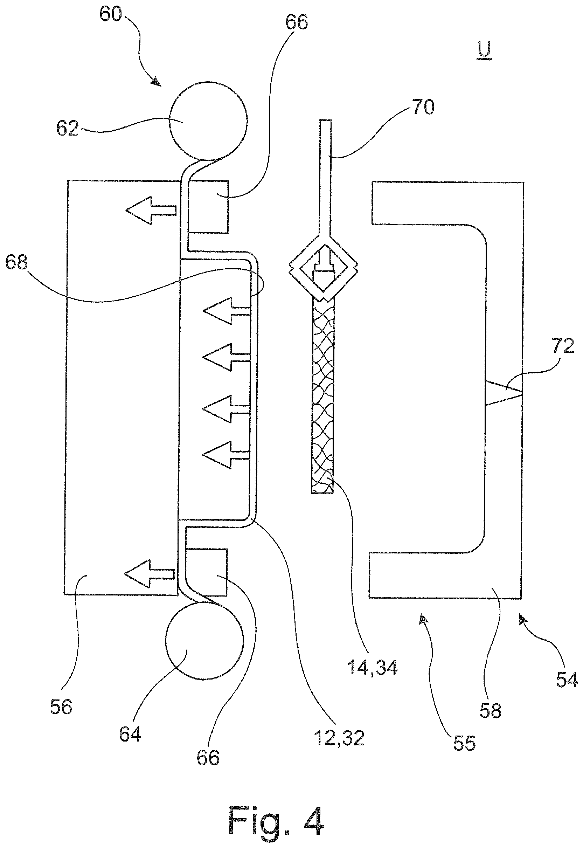

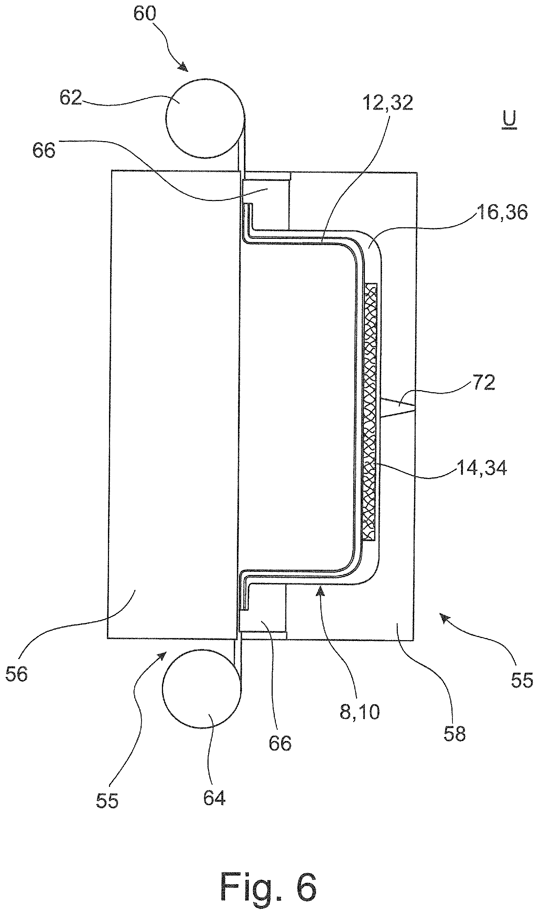

Nachfolgend wird das erfindungsgemäße Verfahren mit Bezug zu den Figuren 3, 4, 5 und 6 beschrieben.

Fig. 3 zeigt eine Vorrichtung 48 zum Herstellen eines erfindungsgemäßen Flüssigkeitsbehälters 2 oder 38, wie beispielsweise in den Figuren 1 und 2 gezeigt.

Die Vorrichtung 48 hat eine erste Heizeinrichtung 50 und eine zweite Heizeinrichtung 52. Die Vorrichtung 48 hat zudem eine Spritzgussvorrichtung 54 mit einer Spritzgussform bzw. einem Spritzgusswerkzeug 55, dass eine erste Formhälfte 56 und eine zweite Formhälfte 58 aufweist, die synonym auch als Werkzeughälften 56, 58 bezeichnet werden.

Die Vorrichtung 48 hat weiter eine Rolle-zu-Rolle Folienzuführung 60. Die Folienzuführung 60 hat eine erste Rolle 62 und eine zweite Rolle 64, die jeweils seitlich des Spritzgusswerkzeugs 55, bzw. seitlich der ersten Formhälfte 56 des Spritzgusswerkzeugs 55, angeordnet sind.

Beim Herstellen eines erfindungsgemäßen Flüssigkeitsbehälters 2, 38 werden zunächst eine Barrierefolie 12, 32 und ein Verstärkungselement 14, 34 zum Herstellen einer ersten Halbschale 8 oder einer zweiten Halbschale 10 bereitgestellt. Das Bereitstellen der Barrierefolie 12, 32 und des Verstärkungselements 14, 34 kann gleichzeitig oder zeitlich aufeinanderfolgend stattfinden.

Beim Bereitstellen der Barrierefolie 12, 34 wird die Barrierefolie 12 zunächst mithilfe der Rolle-zu-Rolle Folienzuführung 60 in dem aus den Formhälften 56, 58 gebildeten Spritzgusswerkzeug 55 positioniert und fixiert. Das Fixieren der Barrierefolie 12, 32 gegenüber der ersten Formhälfte 56 kann mithilfe von Dichtelementen 66 erfolgen.

Mithilfe der Heizvorrichtung 52 wird die Barrierefolie 12, 32 erwärmt. Bei der Heizvorrichtung 52 handelt es sich um eine berührungslose Heizvorrichtung in Form eines Infrarotstrahlers 52.

Gleichzeitig wird das Verstärkungselement 14, 34 mithilfe der Heizvorrichtung 50, die ebenfalls Infrarotstrahler 51 aufweist, erwärmt.

In einem nächsten Verfahrensschritt wird die Barrierefolie 12, 32 gegen eine Werkzeugoberfläche 68 der ersten Formhälfte 56 tiefgezogen, so dass die Barrierefolie 12, 32 durch Thermoformen in die vorgesehene Form gebracht wird. Das aufgeheizte Verstärkungselement 14, 34 wird mithilfe einer Haltevorrichtung 70 zwischen die Formhälften 56, 58 bewegt.

Das Tiefziehen der Barrierefolie 12, 32 erfolgt durch die Erzeugung eines Vakuums im Bereich der Werkzeugoberfläche 68, was dadurch ermöglicht wird, dass die Formhälfte 56 zumindest teilweise aus einem porösen, luftdurchlässigen Werkstoff gebildet ist. Dabei wird die an der Formhälfte 56 anliegende Barrierefolie 12, 32 mithilfe der Dichtelemente 66 an der Werkzeugoberfläche 68 anliegend gegenüber der Umgebung U abgedichtet, so dass ein zuverlässiges, vakuumbasiertes Tiefziehen der Barrierefolie 12, 32 ermöglicht wird.

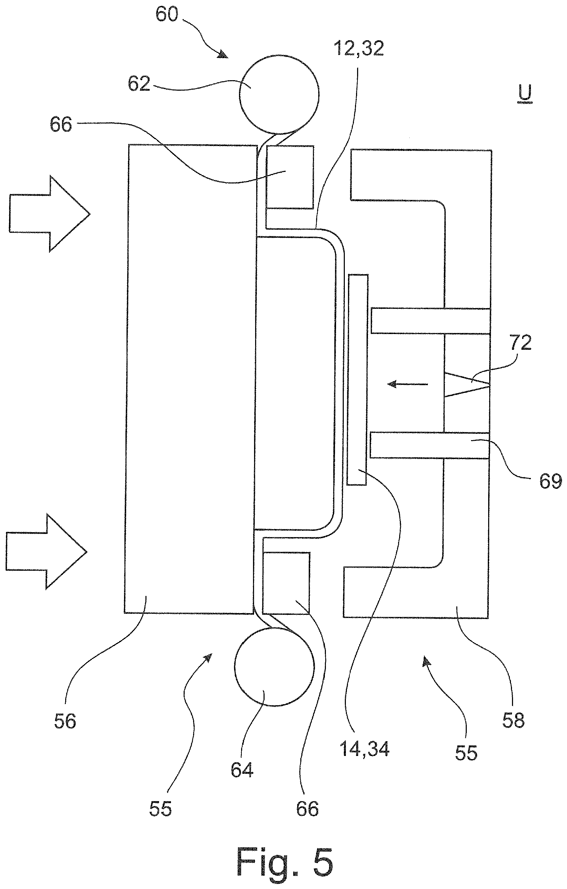

Das zwischen den Formhälften 56, 58 positionierte Verstärkungselement 14, 34, das sich im aufgeheizten Zustand befindet, wird gegen die ebenfalls aus dem vorangehend erfolgten Thermoformen aufgeheizte Barrierefolie 12, 32 gedrückt, um das Verstärkungselement 14, 34 mit der Barrierefolie 12, 32 zu verschweißen und somit stoffschlüssig zu verbinden. Das Andrücken des Verstärkungselements 14, 34 an die Barrierefolie 12, 32 erfolgt mithilfe einer Andrückvorrichtung 69 (Fig. 5).

Nach dem Schließen der Formhälften 56, 58 wird über eine Öffnung 72 die Tragstruktur 16 bzw. 36 an das Verstärkungselement 14, 34 und an die Barrierefolie 12, 32 angespritzt. Nach dem Spritzgussvorgang kann die in dieser Art und Weise hergestellte Halbschale 8, 10 aus dem Spritzgusswerkzeug 55 entnommen werden und mit einer weiteren, in analoger Weise hergestellten Formhälfte 8, 10 zu einem erfindungsgemäßen Kunststoffkraftstoffbehälter 2, 38 verschweißt werden.

### Bezugszeichen

- 2: Flüssigkeitsbehälter / Kunststoffkraftstoffbehälter
- 4: Vorratsvolumen
- 6: Flüssigkeit / Kraftstoff
- 8: erste Halbschale
- 10: zweite Halbschale
- 12: Barrierefolie
- U: Umgebung
- 14: Verstärkungselement
- 16: Tragstruktur
- Z: Vergrößerung
- 18: Verstärkungsfasern/Glasfasern
- 20: Kunststoffmatrix
- 22: Deckschicht
- 24: Deckschicht
- 26: zentrale Schicht
- 28: gekrümmter Übergang
- 30: Seitenwandung
- 32: Barrierefolie
- 34: Verstärkungselement
- 36: Tragstruktur
- 38: Flüssigkeitsbehälter/Kunststoffkraftstoffbehälter
- 40: Verbindungsbereich
- 42: umlaufender Kragen
- 44: erste Seite
- 46: abgewandte Seite
- 48: Vorrichtung
- 50: erste Heizeinrichtung
- 51: Infrarotstrahler
- 52: zweite Heizeinrichtung
- 54: Spritzgussvorrichtung
- 55: Spritzgusswerkzeug
- 56: erste Formhälfte / erste Werkzeughälfte
- 58: zweite Formhälfte / zweite Werkzeughälfte
- 60: Folienzuführung
- 62: erste Rolle
- 64: zweite Rolle
- 66: Dichtelement / Halterahmen
- 68: Werkzeugoberfläche
- 69: Andrückvorrichtung
- 70: Haltevorrichtung
- 72: Öffnung

## Patentansprüche

1. Flüssigkeitsbehälter für ein Kraftfahrzeug,
- mit einem Vorratsvolumen (4) zur Bevorratung einer Flüssigkeit (6),
- mit wenigstens einer das Vorratsvolumen (4) zumindest abschnittsweise begrenzenden Schale (8, 10),
- wobei die Schale (8, 10) zumindest teilweise im Spritzgussverfahren hergestellt worden ist,
- wobei die Schale (8, 10) eine Barrierefolie (12, 32) aufweist,
- wobei die Schale (8, 10) ein Verstärkungselement (14, 34) aufweist, das zumindest teilweise oder vollständig aus einem thermoplastischen Faserverbundwerkstoff gebildet ist,
- durch gekennzeichnet, dass die Schale (8, 10) eine einteilige oder mehrteilige Tragstruktur (16, 36) aufweist, die zumindest teilweise oder vollständig aus einem Spritzgusswerkstoff gebildet ist,
- wobei die Barrierefolie (12, 32) stoffschlüssig mit dem Verstärkungselement (14, 34) verbunden ist und
- wobei die Barrierefolie (12, 32) und das Verstärkungselement (14, 34) jeweils stoffschlüssig mit der Tragstruktur (16, 36) verbunden sind.

2. Flüssigkeitsbehälter nach Anspruch 1,
- wobei das Verstärkungselement (14, 34) zumindest abschnittsweise oder vollständig zwischen der Barrierefolie (12, 32) und der Tragstruktur (16, 36) angeordnet ist,
und/oder
- wobei die Barrierefolie (12, 32) eine Seite (44) des Verstärkungselements (14, 34) teilweise oder vollständig bedeckt,
und/oder
- wobei die Tragstruktur (16, 36) eine Seite (46) des Verstärkungselements (14, 34) zumindest abschnittsweise oder vollständig bedeckt.

3. Flüssigkeitsbehälter nach einem der Ansprüche 1 oder 2,
- wobei die Schale (8) eine erste Halbschale (8) ist, die zusammen mit einer zweiten Halbschale (10) das Vorratsvolumen (4) begrenzt, und
- wobei die zweite Halbschale (10) einen Wandungsaufbau mit einer Barrierefolie (32), einem Verstärkungselement (34) und einer Tragstruktur (36) aufweist.

4. Flüssigkeitsbehälter nach einem der Ansprüche 1 bis 3,
- wobei das Verstärkungselement (14, 34) Verstärkungsfasern (18) aufweist, die in eine thermoplastische Kunststoffmatrix (20) eingebettet sind, wobei die Verstärkungsfasern (18) Glasfasern und/oder Aramidfasern und/oder Kohlenstofffasern oder dergleichen aufweisen, oder die Verstärkungsfasern (18) aus Glasfasern und/oder Aramidfasern und/oder Kohlenstofffasern oder dergleichen bestehen,
und/oder
- wobei das Verstärkungselement (14, 34) Verstärkungsfasern (18) aufweist, die in eine thermoplastische Kunststoffmatrix (20) eingebettet sind, mit der thermoplastischen Kunststoffmatrix (20) aufweisend oder bestehend aus Polyamid, Polyolefin, Polyurethan, Polyphenylensulfid oder dergleichen,
und/oder
- wobei das Verstärkungselement (14, 34) einen langfaserverstärkten oder endlosfaserverstärkten Faserverbundkunststoff aufweist oder aus einem langfaserverstärkten oder endlosfaserverstärkten Faserverbundkunststoff besteht
und/oder
- mit der Tragstruktur (16, 36) aufweisend oder bestehend aus HDPE oder einem schlagzäh modifizierten Polyamid und/oder
- wobei das Verstärkungselement (14, 34) ein Organoblech aufweist oder ein Organoblech ist,
und/oder
- wobei das Verstärkungselement (14, 34) ein unidirektional verstärktes Band aufweist oder ein unidirektional verstärktes Band ist.

5. Flüssigkeitsbehälter nach einem der Ansprüche 1 bis 4,
- wobei die Tragstruktur (16, 36) den Werkstoff PA6 aufweist oder aus PA6 besteht, wobei das Verstärkungselement (14, 34) glasfaserverstärktes PA6 aufweist oder das Verstärkungselement (14, 34) aus glasfaserverstärktem PA6 besteht und wobei die Barrierefolie (12, 32) Deckschichten (22, 24) hat, die PA6 aufweisen oder aus PA6 bestehen, und wobei die Deckschichten (22, 24) der Barrierefolie eine zentrale Schicht (26) der Barrierefolie (12, 32) einfassen, wobei die zentrale Schicht (26) der Barrierefolie EVOH aufweist oder aus EVOH besteht,
oder
- wobei die Tragstruktur (16, 36) den Werkstoff HDPE aufweist oder aus HDPE besteht, wobei das Verstärkungselement (14, 34) glasfaserverstärktes HDPE aufweist oder das Verstärkungselement (14, 34) aus glasfaserverstärktem HDPE besteht und wobei die Barrierefolie (12, 32) Deckschichten (22, 24) hat, die HDPE aufweisen oder aus HDPE bestehen, wobei die Deckschichten (22, 24) der Barrierefolie (12, 32) eine zentrale Schicht (26) der Barrierefolie (12, 32) einfassen, wobei die zentrale Schicht (26) EVOH aufweist oder aus EVOH besteht, und wobei zwischen der zentralen Schicht (26) und einer jeweiligen Deckschicht (22, 24) jeweils eine Haftvermittlerschicht der Barrierefolie (12, 32) angeordnet ist, wobei die Haftvermittlerschichten jeweils LLDPE aufweisen oder aus LLDPE bestehen,
oder
- wobei die Tragstruktur (16, 36) den Werkstoff HDPE aufweist oder aus HDPE besteht, wobei das Verstärkungselement (14, 34) glasfaserverstärktes PA6 aufweist oder das Verstärkungselement (14, 34) aus glasfaserverstärktem PA6 besteht und wobei die Barrierefolie (12, 32) Deckschichten (22, 24) hat, die HDPE aufweisen oder aus HDPE bestehen, wobei die Deckschichten (22, 24) der Barrierefolie (12, 32) eine zentrale Schicht (26) der Barrierefolie (12, 32) einfassen, wobei die zentrale Schicht (26) EVOH aufweist oder aus EVOH besteht und wobei zwischen der zentralen Schicht (26) und einer jeweiligen Deckschicht (22, 24) jeweils eine Haftvermittlerschicht der Barrierefolie (12, 32) angeordnet ist, wobei die Haftvermittlerschichten jeweils LLDPE aufweisen oder aus LLDPE bestehen, und wobei zwischen dem Verstärkungselement (14, 34) und der Barrierefolie (12, 32) und/oder dem Verstärkungselement (14, 34) und der Tragstruktur (16, 36) eine Haftvermittlerschicht vorgesehen ist, wobei die Haftvermittlerschicht LDPE oder LLDPE aufweist oder aus LPDE oder LLDPE besteht.

6. Flüssigkeitsbehälter nach einem der Ansprüche 1 bis 5,
- wobei das Verstärkungselement (14, 34) eine im Wesentlichen ebene Platte (14, 34) ist, die Teil einer das Vorratsvolumen begrenzenden boden- oder deckenseitigen Wandung ist,
- wobei die Tragstruktur (16, 36) einen zumindest abschnittsweise gekrümmten Übergang (28) der boden- oder deckenseitigen Wandung zu einer das Vorratsvolumen (4) begrenzenden Seitenwandung (30) ausbildet
oder
- wobei das Verstärkungselement (14, 34) nach Art einer Freiformfläche in einer, zwei oder drei Raumrichtungen gekrümmt und Teil einer das Vorratsvolumen begrenzenden boden- oder deckenseitigen Wandung ist.

7. Verfahren zum Herstellen eines Flüssigkeitsbehälters, mit den Verfahrensschritten:
- Bereitstellen einer Barrierefolie (12, 32); **gekennzeichnet durch**
- Bereitstellen eines Verstärkungselements (14, 34), das zumindest teilweise oder vollständig aus einem thermoplastischem Faserverbundwerkstoff gebildet ist;
- stoffschlüssiges Verbinden der Barrierefolie (12, 32) mit dem Verstärkungselement (14, 34);
- Spritzgießen einer Tragstruktur (16, 36), wobei ein stoffschlüssiges Verbinden der Tragstruktur (16, 36) mit dem Verstärkungselement (14, 34) und ein stoffschlüssiges Verbinden der Tragstruktur (16, 36) mit der Barrierefolie (12, 32) erfolgt.

8. Verfahren nach Anspruch 7,
- wobei das Bereitstellen der Barrierefolie (12, 32) folgende Verfahrensschritte aufweist:
- Thermoformen der Barrierefolie (12, 32) und
- Positionieren und Fixieren der Barrierefolie (12, 32) in einem Spritzgusswerkzeug (55),
- wobei das Thermoformen der Barrierefolie (12, 32) vor dem Positionieren der Barrierefolie (12, 32) im Spritzgusswerkzeug (55) und/oder nach dem Positionieren der Barrierefolie (12, 32) im Spritzgusswerkzeug (55) erfolgt.

9. Verfahren nach Anspruch 8,
- wobei das Positionieren der Barrierefolie (12, 32) in dem Spritzgusswerkzeug (55) über eine Rolle-zu-Rolle-Zuführung (60) erfolgt
und/oder
- wobei die Fixierung der Barrierefolie an dem Spritzgusswerkzeug mittels eines Halterahmens (66) erfolgt
und/oder
- die Fixierung und das Thermoformen der Barrierefolie (12, 32) durch die Erzeugung eines Unterdrucks im Spritzgusswerkzeug (55) erfolgen.

10. Verfahren nach einem der Ansprüche 7 bis 9, wobei das stoffschlüssige Verbinden der Barrierefolie (12, 32) mit dem Verstärkungselement (14, 34) folgende Verfahrensschritte aufweist:
- Aufheizen des Verstärkungselements (14, 34) auf eine Temperatur, die größer oder gleich einer Schmelztemperatur einer Kunststoffmatrix (20) des Verstärkungselements (14, 34) ist,
- wobei das Aufheizen des Verstärkungselements (14, 34) vor und/oder während des Bereitstellens der Barrierefolie (12, 32) erfolgt;
- Bewegen des Verstärkungselements (14, 34) in einen Bereich zwischen eine erste, die Barrierefolie (12, 32) aufnehmende Werkzeughälfte (56) und eine zweite, insbesondere düsenseitige Werkzeughälfte (58),
- wobei das Verstärkungselement (14, 34) während oder nach dem Aufheizen zwischen die Werkzeughälften (56, 58) bewegt wird;
- stoffschlüssiges Verbinden des Verstärkungselements (14, 34) mit der Barrierefolie (12, 32) durch ein Andrücken des aufgeheizten Verstärkungselements (14, 34) an eine der ersten Werkzeughälfte (56) abgewandte Seite der Barrierefolie (12, 32).

11. Verfahren nach Anspruch 10,
- wobei die Barrierefolie (12, 32) beim Andrücken des aufgeheizten Verstärkungselements (14, 54) eine Restwärme aus einem vorangehenden Thermoformen der Barrierefolie (12, 32) aufweist
und/oder
- wobei die Barrierefolie (12, 32) vor dem Andrücken des aufgeheizten Verstärkungselements (12, 32) durch eine Heizeinrichtung (52) erwärmt wird.

## Claims

1. Liquid container for a motor vehicle,
- comprising a storage volume (4) for storing a liquid (6),
- comprising at least one shell (8, 10), which at least partially delimits the storage volume (4),
- wherein the shell (8, 10) has been produced at least partially in an injection molding process,
- the shell (8, 10) has a barrier film (12, 32),
- the shell (8, 10) has a reinforcing element (14, 34), which is formed at least partially or completely of a thermoplastic fiber-reinforced composite material, **characterized in that**
- the shell (8, 10) has a single-part or multi-part support structure (16, 36), which is formed at least partially or completely of an injection-molded material,
- the barrier film (12, 32) is integrally bonded to the reinforcing element (14, 34), and
- the barrier film (12, 32) and the reinforcing element (14, 34) are each integrally bonded to the support structure (16, 36).

2. Liquid container according to claim 1,
- wherein the reinforcing element (14, 34) is arranged, at least in portions or completely, between the barrier film (12, 32) and the support structure (16, 36),
and/or
- wherein the barrier film (12, 32) partially or completely covers a face (44) of the reinforcing element (14, 34),
and/or
- wherein the support structure (16, 36) covers a face (46) of the reinforcing element (14, 34) at least in portions or completely.

3. Liquid container according to any of claims 1 or 2,
- wherein the shell (8) is a first half-shell (8), which together with a second half-shell (10) delimits the storage volume (4), and
- wherein the second half-shell (10) has a wall structure comprising a barrier film (32), a reinforcing element (34) and a support structure (36).

4. Liquid container according to any of claims 1 to 3,
- wherein the reinforcing element (14, 34) has reinforcing fibers (18), which are embedded in a thermoplastic plastics material matrix (20), the reinforcing fibers (18) comprising glass fibers and/or aramid fibers and/or carbon fibers or the like or the reinforcing fibers (18) consisting of glass fibers and/or aramid fibers and/or carbon fibers or the like,
and/or
- wherein the reinforcing element (14, 34) has reinforcing fibers (18) that are embedded in a thermoplastic plastics material matrix (20), the plastics material matrix (20) comprising or consisting of polyamide, polyolefin, polyurethane, polyphenylene sulfide or the like,
and/or
- wherein the reinforcing element (14, 34) comprises a fiber-reinforced composite plastics material reinforced with long fibers or endless fibers or consists of a fiber-reinforced composite plastics material reinforced with long fibers or endless fibers,
and/or
- with the support structure (16, 36) comprising or consisting of HDPE or a polyamide
modified to be shock-resistant,
and/or
- wherein the reinforcing element (14, 34) comprises or consists of an organic sheet,
and/or
- wherein the reinforcing element (14, 34) comprises or is a unidirectionally reinforced strip.

5. Liquid container according to any of claims 1 to 4,
- wherein the support structure (16, 36) comprises or consists of the material PA6, the reinforcing element (14, 34) comprises glass-fiber-reinforced PA6 or the reinforcing element (14, 34) consists of glass-fiber-reinforced PA6, and the barrier film (12, 32) has cover layers (22, 24) that comprise or consist of PA6, and the cover layers (22, 24) of the barrier film enclose a central layer (26) of the barrier film (12, 32), the central layer (26) of the barrier film comprising or consisting of EVOH,
or
- wherein the support structure (16, 36) comprises or consists of the material HDPE, the reinforcing element (14, 34) comprises glass-fiber-reinforced HDPE or the reinforcing element (14, 34) consists of glass-fiber-reinforced HDPE, and the barrier film (12, 32) has cover layers (22, 24) that comprise or consist of HDPE, the cover layers (22, 24) of the barrier film (12, 32) enclosing a central layer (26) of the barrier film (12, 32), the central layer (26) comprising or consisting of EVOH, and an adhesion promotor layer of the barrier film (12, 32) being arranged between the central layer (26) and an associated cover layer (22, 24) in each case, the adhesion promotor layers each comprising or consisting of LLDPE,
or
- the support structure (16, 36) comprises or consists of the material HDPE, the reinforcing element (14, 34) comprises glass-fiber-reinforced PA6 or the reinforcing element (14, 34) consists of glass-fiber-reinforced PA6, and the barrier film (12, 32) has cover layers (22, 24) that comprise or consist of HDPE, the cover layers (22, 24) of the barrier film (12, 32) enclosing a central layer (26) of the barrier film (12, 32), the central layer (26) comprising or consisting of EVOH, and an adhesion promotor layer of the barrier film (12, 32) being arranged between the central layer (26) and an associated cover layer (22, 24) in each case, the adhesion promotor layers each comprising or consisting of LLDPE, and an adhesion promotor layer being provided between the reinforcing element (14, 34) and the barrier film (12, 32) and/or the reinforcing element (14, 34) and the support structure (16, 36), the adhesion promotor layer comprising LDPE or LLDPE or consisting of LDPE or LLDPE.

6. Liquid container according to any of claims 1 to 5,
- wherein the reinforcing element (14, 34) is a substantially planar plate (14, 34), which is part of a base-side or cover-side wall delimiting the storage volume,
- the support structure (16, 36) forming a transition (28), curved at least in portions, from the base-side or cover-side wall to a side wall (30) delimiting the storage volume (4),
or
- wherein the reinforcing element (14, 34) is curved in one, two or three directions in space, in the manner of a free-form surface, and is part of a base-side or cover-side wall delimiting the storage volume.

7. Method for producing a liquid container, comprising the method steps of:
- providing a barrier film (12, 32);
**characterized in**
- providing a reinforcing element (14, 34), which is formed at least partially or completely of a thermoplastic fiber-reinforced composite material;
- integrally connecting the barrier film (12, 32) to the reinforcing element (14, 34);
- injection-molding a support structure (16, 36), the support structure (16, 36) being integrally connected to the reinforcing element (14, 34) and the support structure (16, 36) being integrally connected to the barrier film (12, 32).

8. Method according to claim 7,
- wherein providing the barrier film (12, 32) comprises the following method steps:
- thermoforming the barrier film (12, 32) and
- positioning and fixing the barrier film (12, 32) in an injection-molding tool (55),
- the barrier film (12, 32) being thermoformed before the barrier film (12, 32) is positioned in the injection-molding tool (55) and/or after the barrier film (12, 32) is positioned in the injection-molding tool (55).

9. Method according to claim 8,
- wherein the barrier film (12, 32) is positioned in the injection-molding tool (55) using a roll-to-roll feed-in (60)
and/or
- wherein the barrier film is fixed to the injection-molding tool using a holding frame (66)
and/or
- the barrier film (12, 32) is fixed and thermoformed by generating a negative pressure in the injection-molding tool (55).

10. Method according to any of claims 7 to 9, wherein integrally connecting the barrier film (12, 32) to the reinforcing element (14, 34) comprises the following method steps:
- heating the reinforcing element (14, 34) to a temperature greater than or equal to a melting point of a plastics material matrix (20) of the reinforcing element (14, 34),
- the reinforcing element (14, 34) being heated before and/or during the provision of the barrier film (12, 32);
- moving the reinforcing element (14, 34) into a region between a first tool half (56) that receives the barrier film (12, 32) and a second, in particular nozzle-side, tool half (58),
- the reinforcing element (14, 34) being moved between the tool halves (56, 58) during or after the heating;
- integrally connecting the reinforcing element (14, 34) to the barrier film (12, 32) by pressing the heated reinforcing element (14, 34) against a face of the barrier film (12, 32) remote from the first tool half (56).

11. Method according to claim 10,
- wherein the barrier film (12, 32) has a residual heat from preceding thermoforming of the barrier film (12, 32), when the heated reinforcing element (14, 54) is pressed on,
and/or
- wherein the barrier film (12, 32) is heated by a heating device (52) before the heated reinforcing element (12, 32) is pressed on.

## Revendications

1. Réservoir à liquide pour un véhicule automobile,
- comportant un volume de stockage (4) pour stocker un liquide (6),
- comportant au moins une coque (8, 10), laquelle délimite au moins par sections le volume de stockage (4),
- dans lequel la coque (8, 10) a été fabriquée au moins partiellement par moulage par injection,
- dans lequel la coque (8, 10) comporte un film barrière (12, 32),
- dans lequel la coque (8, 10) comporte un élément de renfort (14, 34), lequel est au moins partiellement ou totalement formé à partir d'une matière composite fibreuse thermoplastique,
- **caractérisé en ce que** la coque (8, 10) comporte une structure porteuse (16, 36) monobloc ou en plusieurs parties, laquelle est au moins partiellement ou complètement formée à partir d'une matière de moulage par injection,
- dans lequel le film barrière (12, 32) est relié à l'élément de renfort (14, 34) par liaison de complémentarité de matière et
- dans lequel le film barrière (12, 32) et l'élément de renfort (14, 34) sont respectivement reliés à la structure porteuse (16, 36) par liaison de complémentarité de matière.

2. Réservoir à liquide selon la revendication 1,
- dans lequel l'élément de renfort (14, 34) est disposé au moins par sections ou complètement entre le film barrière (12, 32) et la structure porteuse (16, 36),
et/ou
- dans lequel le film barrière (12, 32) recouvre partiellement ou complètement un côté (44) de l'élément de renfort (14, 34),
et/ou
- dans lequel la structure porteuse (16, 36) recouvre un côté (46) de l'élément de renfort (14, 34) au moins par sections ou complètement.

3. Réservoir à liquide selon l'une des revendications 1 ou 2,
- dans lequel la coque (8) est une première demi-coque (8), laquelle, avec une seconde demi-coque (10), délimite le volume de stockage (4), et
- dans lequel la seconde demi-coque (10) comporte une structure de paroi dotée d'un film barrière (32), d'un élément de renfort (34) et d'une structure porteuse (36).

4. Réservoir à liquide selon l'une des revendications 1 à 3,
- dans lequel l'élément de renfort (14, 34) comporte des fibres de renfort (18) intégrées dans une matrice plastique (20) thermoplastique, dans lequel les fibres de renfort (18) comportent des fibres de verre et/ou des fibres d'aramide et/ou des fibres de carbone ou analogues, ou les fibres de renfort (18) sont constituées de fibres de verre et/ou de fibres d'aramide et/ou de fibres de carbone ou analogues,
et/ou
- dans lequel l'élément de renfort (14, 34) comporte des fibres de renfort (18) intégrées dans une matrice plastique (20) thermoplastique, la matrice plastique (20) thermoplastique comportant ou étant constituée de polyamide, polyoléfine, polyuréthane, sulfure de polyphénylène ou analogues,
et/ou
- dans lequel l'élément de renfort (14, 34) comporte une matière plastique composite fibreuse renforcée par des fibres longues s ou renforcée par des fibres continues ou consiste en une matière plastique composite fibreuse renforcée par des fibres longues s ou renforcée par des fibres continues,
et/ou
- la structure porteuse (16, 36) comportant ou étant constituée de HDPE ou d'un polyamide modifié résistant aux chocs
et/ou
- dans lequel l'élément de renfort (14, 34) comporte une tôle organique ou est une tôle organique
et/ou
- dans lequel l'élément de renfort (14, 34) comporte un ruban renforcé unidirectionnellement ou est un ruban renforcé unidirectionnellement.

5. Réservoir à liquide selon l'une quelconque des revendications 1 à 4,
- dans lequel la structure porteuse (16, 36) comporte la matière PA6 ou est constituée de PA6, dans lequel l'élément de renfort (14, 34) comporte du PA6 renforcé par des fibres de verre ou l'élément de renfort (14, 34) est constitué de PA6 renforcé par des fibres de verre et dans lequel le film barrière (12, 32) a des couches de recouvrement (22, 24), lesquelles comportent du PA6 ou sont constituées de PA6, et dans lequel les couches de recouvrement (22, 24) entourent une couche centrale (26) du film barrière (12, 32), dans lequel la couche centrale (26) du film barrière comporte ou est constituée d'EVOH,
ou
- dans lequel la structure porteuse (16, 36) comporte la matière HDPE ou est constituée de HDPE, dans lequel l'élément de renfort (14, 34) comporte du HDPE renforcé par des fibres de verre ou l'élément de renfort (14, 34) est constitué de HDPE renforcé par des fibres de verre et dans lequel le film barrière (12, 32) comporte des couches de recouvrement (22, 24), lesquelles comportent du HDPE ou sont constituées de HDPE, dans lequel les couches de recouvrement (22, 24) entourent une couche centrale (26) du film barrière (12, 32), dans lequel la couche centrale (26) du film barrière (12, 32) comporte ou est constituée d'EVOH, et dans lequel une couche promotrice d'adhérence du film barrière (12, 32) est disposée entre la couche centrale (26) et une couche de recouvrement (22, 24) respective, dans lequel les couches promotrices d'adhérence comportent respectivement du LLDPE ou sont constituées de LLDPE,
ou
- dans lequel la structure porteuse (16, 36) comporte la matière HDPE ou est constituée de HDPE, dans lequel l'élément de renfort (14, 34) comporte du PA6 renforcé par des fibres de verre ou l'élément de renfort (14, 34) est constitué de PA6 renforcé par des fibres de verre et dans lequel le film barrière (12, 32) comporte des couches de recouvrement (22, 24), lesquelles comportent du HDPE ou sont constituées de HDPE, dans lequel les couches de recouvrement (22, 24) entourent une couche centrale (26) du film barrière (12, 32), dans lequel la couche centrale (26) du film barrière (12, 32) comporte ou est constituée d'EVOH et dans lequel une couche promotrice d'adhérence du film barrière (12, 32) est disposée entre la couche centrale (26) et une couche de recouvrement (22, 24) respective, dans lequel les couches promotrices d'adhérence comportent respectivement du LLDPE ou sont constituées de LLDPE, et dans lequel une couche promotrice d'adhérence est située entre l'élément de renfort (14, 34) et le film barrière (12, 32) et/ou l'élément de renfort (14, 34) et la structure porteuse (16, 36), dans lequel la couche promotrice d'adhérence comporte du LDPE ou du LLDPE ou est constituée de LPDE ou LLDPE.

6. Réservoir à liquide selon l'une quelconque des revendications 1 à 5,
- dans lequel l'élément de renfort (14, 34) est une plaque (14, 34) essentiellement plate, laquelle fait partie d'une paroi côté sol ou plafond délimitant le volume de stockage,
- dans lequel la structure porteuse (16, 36) forme une transition (28) au moins partiellement incurvée de la paroi côté sol ou plafond à une paroi latérale (30) délimitant le volume de stockage (4)
ou
- dans lequel l'élément de renfort (14, 34) est incurvé dans une, deux ou trois directions spatiales à la manière d'une surface de forme libre et fait partie d'une paroi côté sol ou plafond délimitant le volume de stockage.

7. Procédé de fabrication d'un réservoir à liquide, comportant les étapes suivantes :
- la fourniture d'un film barrière (12, 32) ; **caractérisé par**
- la fourniture d'un élément de renfort (14, 34), lequel est au moins partiellement ou totalement formé à partir d'une matière composite fibreuse thermoplastique ;
- la liaison par complémentarité de matière du film barrière (12, 32) à l'élément de renfort (14, 34) ;
- le moulage par injection d'une structure porteuse (16, 36), dans lequel une liaison par complémentarité de matière de la structure porteuse (16, 36) à l'élément de renfort (14, 34) et une liaison par complémentarité de matière de la structure porteuse (16, 36) au film barrière (12, 32) sont effectuées.

8. Procédé selon la revendication 7,
- dans lequel la fourniture du film barrière (12, 32) comprend les étapes suivantes :
- le thermoformage du film barrière (12, 32) et
- le positionnement et la fixation du film barrière (12, 32) dans un outil de moulage par injection (55),
- dans lequel le thermoformage du film barrière (12, 32) est effectué avant le positionnement du film barrière (12, 32) dans l'outil de moulage par injection (55) et/ou après le positionnement du film barrière (12, 32) dans l'outil de moulage par injection (55).

9. Procédé selon la revendication 8,
- dans lequel le positionnement du film barrière (12, 32) dans l'outil de moulage par injection (55) est effectué par le biais d'une alimentation rouleau à rouleau (60)
et/ou
- dans lequel la fixation du film barrière sur l'outil de moulage par injection s'effectue au moyen d'un cadre de support (66)
et/ou
- la fixation et le thermoformage du film barrière (12, 32) sont effectués par génération d'une dépression dans l'outil de moulage par injection (55).

10. Procédé selon l'une quelconque des revendications 7 à 9, dans lequel la liaison par complémentarité de matière du film barrière (12, 32) à l'élément de renfort (14, 34) comporte les étapes suivantes :
- le chauffage de l'élément de renfort (14, 34) à une température supérieure ou égale à une température de fusion d'une matrice plastique (20) de l'élément de renfort (14, 34),
- dans lequel l'élément de renfort (14, 34) est chauffé avant et/ou pendant la fourniture du film barrière (12, 32) ;
- le déplacement de l'élément de renfort (14, 34) dans une zone comprise entre une première moitié d'outil (56) accueillant le film barrière (12, 32) et une seconde moitié d'outil (58), en particulier du côté buse,
- dans lequel l'élément de renfort (14, 34) est déplacé entre les moitiés d'outil (56, 58) pendant ou après le chauffage ;
- la liaison par complémentarité de matière de l'élément de renfort (14, 34) au film barrière (12, 32) par pressage de l'élément de renfort (14, 34) chauffé contre un côté du film barrière (12, 32) opposé à la première moitié d'outil (56).

11. Procédé selon la revendication 10,
- dans lequel le film barrière (12, 32) comporte une chaleur résiduelle provenant d'un thermoformage précédent du film barrière (12, 32) lors du pressage de l'élément de renfort (14, 54) chauffé
et/ou
- dans lequel le film barrière (12, 32) est chauffé par un dispositif chauffant (52) avant le pressage de l'élément de renfort (12, 32) chauffé.
